# EUROPEAN PATENT APPLICATION

(11) **EP 1 571 654 A1**
(43) Date of publication of application: **07.09.2005**
(21) Application number: 03812676.9
(22) Date of filing: 27.08.2003
(51) Int. Cl.: G11B 5/024

(54) **RECODED DATA ERASING DEVICE OF MAGNETIC STORAGE**

(30) Priority: 09.12.2002 JP 2002356965
(71) Applicant: Orient Instrument Computer Co., Ltd, Osaka 536-0014 (JP)
(72) Inventor: Ito, Tomoaki, c/o Orient Inst. Computer Co., Ltd., Osaka-shi, Osaka 536-0014 (JP)
(74) Representative: Paul, Dieter-Alfred
(86) International application number: PCT/JP2003/010915
(87) International publication number: WO 2004/053850

(57) **Abstract**

The present invention defines in a main body (1) of a recorded data eraser a cavity (2) for insertion of a magnetic storage device (M) in the cavity and includes a generator (3) for generating a magnetic field so as to erase recorded data in the device (M) inserted in the insertion cavity (2) and a magnetic body (4) arranged within the magnetic field generated by the generator (3).

## Description

### TECHNICAL FIELD

The present invention relates to a recorded data eraser for a magnetic storage device used for erasing data recorded in a storage medium in a magnetic storage device such as a hard disk drive or a magnetic tape cartridge.

### BACKGROUND ART

When a hard disk drive is abandoned or reused, for example, data recorded on a hard disk in the hard disk drive are commonly erased in view of preventing leakage of data.

Such erase of recorded data in a hard disk drive is conventionally done by repeatedly writing overwriting data such as "00" over stored data on the hard disk. However, the erasing process by the data overwriting has a problem of heavy workloads and time-consuming. For example, it takes more than 12 hours to erase data on a hard disk of 20 gigabytes of storage capacity.

On the other hand, as an eraser for erasing data on floppy disks and magnetic tapes, which are also recording media, a toroidal coil wound around an outer periphery of a ring-shaped core, arranged in a casing of the eraser body and connected to an AC power source is known (for example, refer to patent document 1).

Patent Document 1: Japanese Patent No. 2545451

The eraser arranges a floppy disk or a tape at an outer face of the eraser body and applies an alternating current to the coil from an AC power source so as to generate an alternating magnetic field, whereby erasing data recorded on the floppy disk or the tape.

However, for example, in the case of erasing data in a hard disk drive by using the eraser, since a hard disk inside the hard disk drive is accommodated within a casing made of metal such as iron and aluminum, the number of magnetic field lines passing through the disk inside the hard disk drive is few, failing to effectively erase data recorded on the hard disk only with the hard disk drive arranged at an outer face of the eraser and with a magnetic field produced or generated by the eraser.

It is therefore an object of the present invention made in view of such technical background to provide an improved recorded data eraser for a magnetic storage device that erases data recorded on the storage medium in the magnetic storage device readily and with certainty.

To solve the problems described above, the inventors performed experiments described below, in seeking a means for exerting more intense magnetic field on a storage medium in a magnetic storage device such as a hard disk drive arranged in the magnetic field.

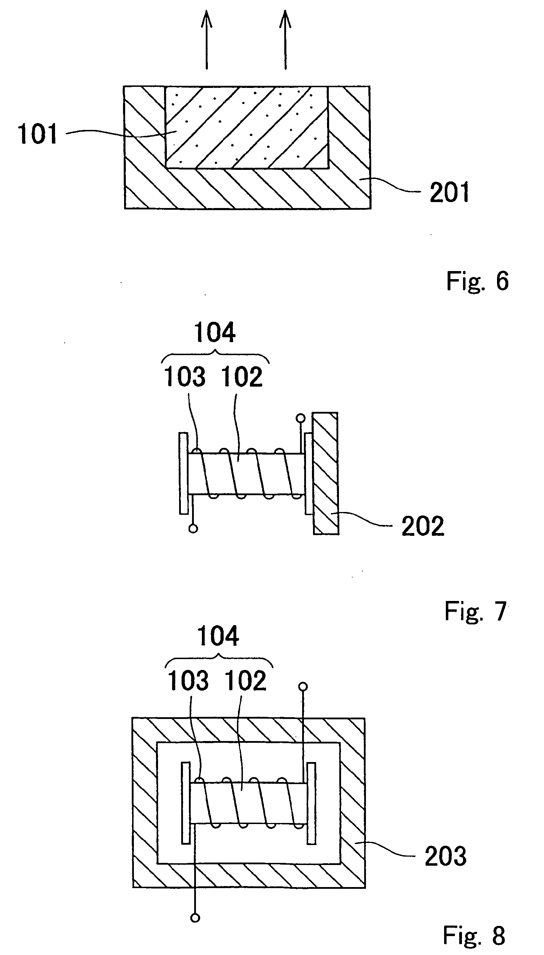

Referring to Fig. 6, in a first example of experiments, how changed a magnetic field by a permanent magnet 101 as a generator for generating the magnetic field, all faces of the magnet 101 except for a main face being enclosed with an iron plate 201 of a trough shape, compared with the case of the permanent magnet 101 alone, was measured by a gaussmeter and the like. In the example, it was revealed that a magnetic flux density was increased in a direction indicated by arrows, compared with the case of the magnet 101 alone.

Referring to Fig. 7, in a second example of experiments, how changed a magnetic field generated by a generator 104 for generating the magnetic field that involves a coil 103 wound around a coil spool 102, with an iron plate 202 stood adjacent to the generator 104, compared with the case of the magnet 101 alone, was measured by a gaussmeter and the like. In the example, it was revealed that a magnetic flux density in the coil 103 was increased and equalized, compared with the case of the generator 104 alone.

Referring to Fig. 8, in a third example of experiments, how changed a magnetic field generated by a generator 104 for generating a magnetic field that involves a coil 103 wound around a coil spool 102 accommodated within an iron casing 203 of a box shape, compared with the case of the generator 104 alone, was measured by a gaussmeter and the like. Also in the example, it was revealed that a magnetic flux density in the coil 103 was increased and equalized, compared with the case of the generator 104 alone.

After a consideration of the result by the examples of experiments, the inventors found that an arrangement of a magnetic body such as iron within a magnetic field generated by a generator for generating the magnetic field exerts more intense magnetic field on a magnetic storage device, thereby effectively erasing recorded data in a hard disk drive and the like, and completed the invention.

### SUMMARY OF THE INVENTION

It is therefore a solution of the problems described above to provide a recorded data eraser for a magnetic storage device defining in a main body thereof a cavity for insertion of the magnetic storage device in the cavity and including a generator for generating a magnetic field so as to erase recorded data in the device inserted in the insertion cavity and a magnetic body arranged within the magnetic field generated by the generator.

In the data eraser, the magnetic storage device is placed within the magnetic field generated by the generator, with the device inserted into the insertion cavity in the main body, and a magnetic flux based on the magnetic field not only erases data recorded on the storage medium in the device in a short period, but also enhances its erasability, due to an increase of magnetic field lines passing through the device, compared with the case setting the device outside of the main body of an eraser.

Especially, an arrangement of the magnetic body within the magnetic field generated by the generator facilitates magnetic field lines passing through an iron, for example in the case of iron-base material, and for example in the case of aluminum-base material, generates on a surface of or within the material eddy currents, whereby additional magnetic fields are generated. In any case, the magnetic flux exerting on the device increases and the magnetic field lines are uniformly applied to the entire storage medium in the device, thereby increasing an erasing effect of data. Herein, it is preferable that the magnetic flux density in the insertion cavity is set within the range of 6,000 to 15,000 gauss in erasing data in the device.

When the generator includes a coil arranged so as to encircle the magnetic storage device inserted in the insertion cavity and a direct-current power supply circuit for exciting the coil, it is easy to adjust intensity of the magnetic field.

Further, when the main body of the eraser includes a casing of a box shape with its front face open and a lid for closing the opening of the casing openably and closably, wherein the casing accommodates a hollow coil spool, with its internal space functioning as the insertion cavity and the coil wound around the outer periphery of the spool, such that an opening of the internal space faces to the opening of the casing, and wherein the casing and the lid functions as the magnetic body, the magnetic field lines uniformly and effectively reach the entire storage medium in the device, thereby increasing an erasing effect of data and achieving an uniform data erase.

It is preferable that the direct-current power supply circuit includes a direct-current converter for converting an alternating current into a direct current of a predetermined voltage, a capacitor charged by an electric power supply from the direct-current converter and connected in parallel with the coil, an reactor interposed in an input line from the direct-current converter to the capacitor, and a switching device interposed between the capacitor and the coil.

### BRIEF DESCRIPTION OF THE DRAWINGS

Fig. 1 is a perspective view of a data eraser for a magnetic storage device that is an embodiment of the present invention;
Fig. 2 is a partially broken side view of the data eraser;
Fig. 3 is a perspective view showing a coil and a casing of a box shape in the data eraser;
Fig. 4 is a cross-sectional view taken along line IV - IV of Fig. 1;
Fig. 5 is an electrical circuit diagram of a DC power supply circuit in the data eraser;
Fig. 6 is an illustration of an example of experiments for increasing a magnetic flux density;
Fig. 7 is an illustration of another example of experiments for increasing a magnetic flux density; and
Fig. 8 is an illustration of still another example of experiments for increasing a magnetic flux density.

### DESCRIPTION OF THE PREFERRED EMBODIMENTS

Now, a preferred embodiment of the present invention will be described below, making reference to the accompanying drawings.

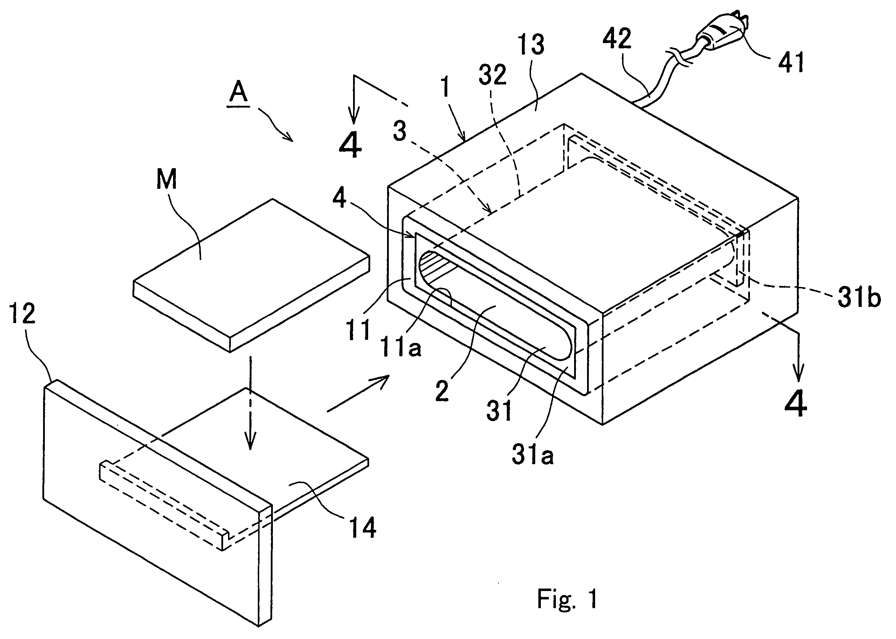

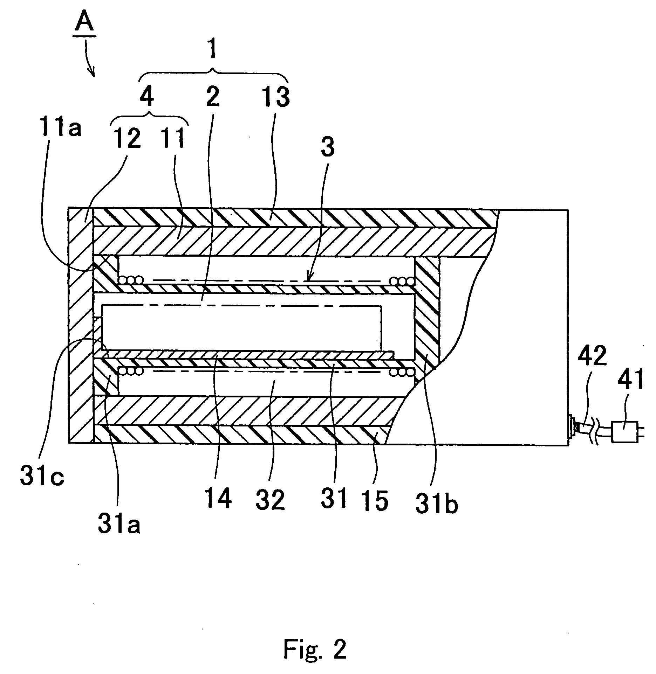

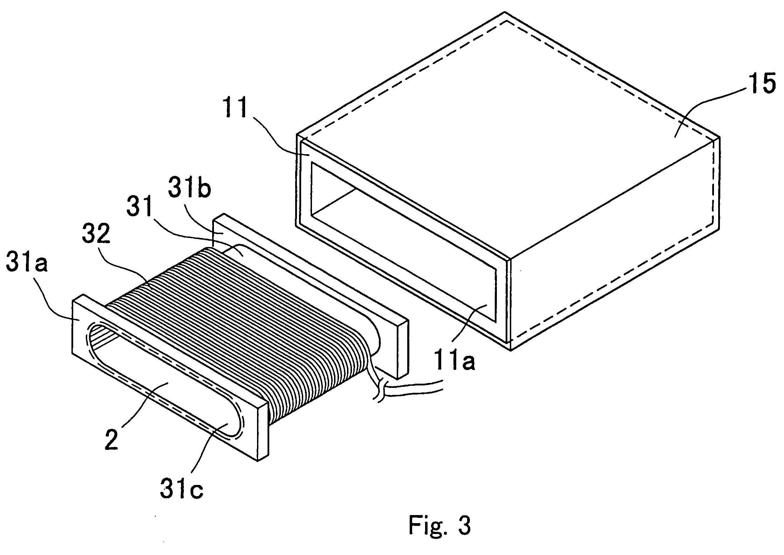

Fig. 1 is a perspective view of a data eraser for a magnetic storage device that is an embodiment of the present invention, Fig. 2 is a partially broken side view of the data eraser, and Fig. 3 is a perspective view showing a coil and a casing of a box shape in the data eraser. Herein, the description below illustrates a hard disk drive as the magnetic storage device, whose data is to be erased, though it is also applicable to other magnetic storage devices such as a magnetic tape cartridge.

Referring to Figs. 1 and 2, the data eraser (A) includes a main body 1 of the eraser defining in the main body 1 a cavity 2 for insertion of a hard disk drive (M) in the cavity, a generator 3 in the main body 1 for generating a magnetic field, and a magnetic body 4 provided within the magnetic field generated by the generator 3.

The main body 1 consists essentially of a casing 11 of a box shape with its front end open, a lid 12 for closing the opening 11a of the casing 11 openably and closably, and an outer covering 13 of a box shape made of plastics covering an outer surface of the casing 11 with its front end open. It is needless to say that closing the opening 11a of the casing 11 by the lid 12 also closes the opening of the outer covering 13 openably and closably.

A plate-like supporter 14 projects backwards in a horizontal position with its proximal end secured to the back face of the lid 12 so that the hard disk drive (M) is placed on the supporter 14. The supporter 14 is formed with such size as being inserted into the cavity 2 with carrying the drive (M) when the opening 11a of the casing 11 is closed by the lid 12. It is sufficient if the supporter 14 is capable of supporting the drive (M), and the supporter 14 is not limited to a plate shape. If users are to insert the drive (M) directly into the cavity 2 in the main body 1, the lid 12 may be mounted to the end having the opening either of the casing 11 or the outer covering 13 with a hinge or the like openably and closably.

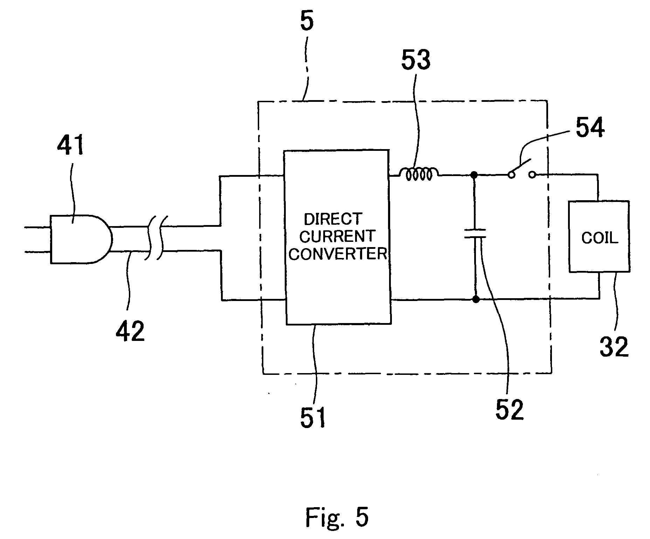

The generator 3 is constituted by a coil 32 wound around a coil spool 31 forming a multiplicity of loops toward a longitudinal direction of the coil spool 31 along its outer circumference, and a direct-current power supply circuit 5 (in Fig. 5) described below. An internal space of a flat cylindrical shape in the coil spool 31 functions as the insertion cavity 2. Herein, flanges 31a and 31b are formed integrally with the front and rear ends of the coil spool 31 respectively.

The coil spool 31 is accommodated within the casing 11 as the front flange 31a is inserted and fit in the opening 11a of the casing 11, and is positioned by the flanges 31a and 31 b, so that an opening 31 c of the front flange 31a functions as an opening of the cavity 2, that is, an insertion slot for the drive (M).

The coil 4 generates a magnetic field in such a direction as penetrating through the cavity 2 which is the internal space of the coil spool 31, by means of the direct-current power supply circuit 5, and the magnetic field erases recorded data on a hard disk (not shown) in the drive (M).

The casing 11 and the lid 12 are made of ferromagnetic body, for example, a plate-like iron or its alloy material, and function as the magnetic body 4. The magnetic body 4 increases a magnetic flux within the cavity 2 by the magnetic field generated by the coil 32, equalizes a magnetic flux density in a transverse section of the cavity 2, and applies it to the drive (M). In other words, the magnetic body 4 is for facilitating and equalizing an operation of data erase by the magnetic field in the coil 32. This is probably due to the casing 11 and the lid 12 both made of iron-base material that enable the magnetic field lines produced by the coil 32 to pass therethrough, thereby obtaining an increase and an equalization of the magnetic flux in the cavity 2. The magnetism is especially intense at the opening of the casing 11 (adjacent to the insertion slot of the drive (M)). Of course, constituent materials of the magnetic body 4 are not limited to the iron-base materials described above, and may be other ferromagnetic bodies such as nickel.

Further, the casing 11 and the lid 12 may be constituted by paramagnetic materials such as aluminum and titanium. This case can also provide an increase of the magnetic flux and an equalization of the magnetic flux density in the cavity 2. That is probably due to the magnetic field that generates eddy currents on the surface of or within both the casing 11 and the lid 12, which eddy currents generate additional magnetic fields.

The main body 1 of the device incorporates a circuit board (not shown) having the DC power supply circuit 5 shown in Fig. 5 for exciting the coil 32.

Referring to Fig. 5, the DC power supply circuit 5 includes a direct-current converter 51 for converting a commercial alternating current, applied via a power cord 42 having a plug 41 (in Fig. 1) for connecting with the commercial alternating-current power source, into a direct current of a predetermined voltage, a capacitor 52 charged by an electric power supply from the DC converter 51 and connected in parallel with the coil 32, an reactor 53 interposed in an input line from the DC converter 51 to the capacitor 52, and a switching device 54 interposed between the capacitor 52 and the coil 32. Closing the switching device 54 discharges the capacitor 52 to the coil 32, and by the discharge, the coil 32 generates the magnetic field therein.

Now, a method for using the data eraser (A) for a hard disk drive constituted in a way described above will be described in detail below.

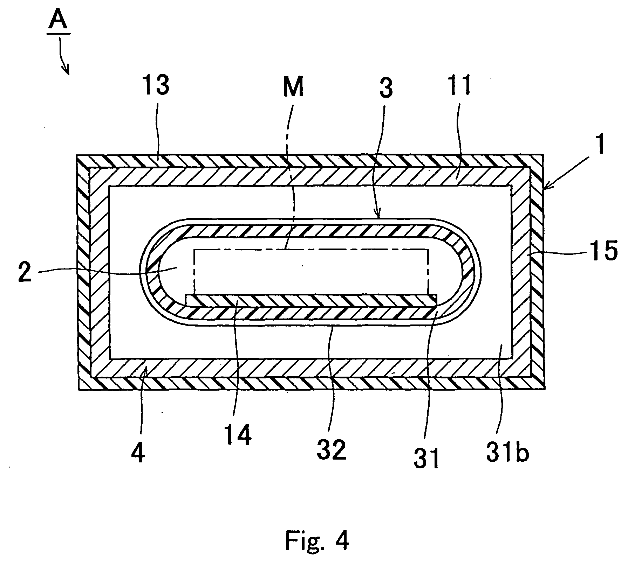

With the switching device 54 of the DC power supply circuit 5 open, the eraser (A) is connected to the commercial alternating-current power source via the power cord 42. Thereafter, a hard disk drive (M) whose stored data is to be erased is put on the supporter 14 with the depth direction adjusted hightwise. Subsequently, insertion of the supporter 14 into the insertion cavity 2 and closing the opening 11a of the casing 11 with the lid 12 insert the drive (M) into the cavity 2, as seen in Figs. 2 and 4.

At this time, the capacitor 52 of the DC power supply circuit 5 is charged by an electric power supply from the DC converter 51. In this state, closing the switching device 54 discharges the capacitor 52 to the coil 32 and the discharge generates a magnetic field in the internal space of the coil 32, that is, the insertion cavity 2 where the hard disk drive (M) is inserted. Magnetic field lines by the magnetic field penetrate the metal casing of the drive (M), thereby erasing data recorded on the hard disk therein including cylinder information.

Since the casing 11 and the lid 12 both made of iron is placed within the magnetic field generated by the coil 32, the magnetic field lines by the magnetic field are easy to pass through the casing 11 and the lid 12, so that the magnetic flux (the magnetic flux density) in the cavity 2 is increased about half as many again as and the magnetic field lines uniformly reach all over the hard disk inside, thereby enabling data to be almost completely erased evenly. In this case, the thicker a thickness of the casing 11 and the lid 12 is, the more intense the magnetism is, thereby enabling a high erasing effect.

After a predetermined time duration, closing the switching device 54 stops generating the magnetic field by the coil 32 so as to prepare for another data erase.

It is required to exert more intense magnetism than a written magnetism on the hard disk drive (M) for erasing written data including cylinder information. From this view, the more intense the magnetism by the coil 32 that exerts on the cavity 2 is the better. However, the drive (M) incorporates a controlling portion besides the hard disk of a disc shape for writing data, so that too much enlargement of the magnetic field for data erasing not only erases data but also destroys the controlling portion, resulting in a difficulty of a reuse of the drive (M).

Consequently, a size of the magnetic field acting on the drive (M) is preferably set within the range of 6,000 to 15,000 gauss at a magnetic flux density. The magnetic flux density less than 6,000 gauss is inadequate to erase data. On the other hand, the magnetic flux density more than 15,000 gauss destroys not only data but also the controlling portion. More preferably, it is within the range of 8,000 to 13,000 gauss.

Herein, an intensity of the magnetic field generated by the coil 32 is readily adjustable depending on change of the number of winding of the coil and a current applied to the coil.

Insertion of the hard disk drive (M) into the cavity 2 encircled with the coil 32 in which the intense magnetic field is generated increases a passing of the magnetic field lines through the drive (M) with the result that a large erasing effect of data is obtained with a little weight of the coil.

Duration for which the magnetic field is generated by the coil 32, in other words, for which the switching device 54 is closed, is not limited particularly, but preferably set for 10 ms or less. Even if the duration exceeds 10 ms, it achieves the same erasing effect of data, or rather lowers energy efficiency and wastes time.

The hard disk drive (M) whose data has been erased as described above is ejected from the cavity 2 of the eraser 1, and abandoned or reused, depending on need.

Herein, the preferred embodiment employs the coil 32 as the generator 3 for generating the magnetic field, though it is not limited thereto, and a permanent magnet or an electromagnet may be employed.

Further, the magnetic body 4 is not limited to a constitution of the casing 11 and the lid 12, and for example, may be constituted by only the casing 11 or may be constituted by an arrangement of such as a flat plate made of magnetic body in the magnetic field generated by the generator 3.

As described above, the present invention exerts a magnetic field generated by a generator on an insertion cavity where a magnetic storage device is inserted, so as to not only readily erase data on the storage medium in the device, but also effectively produce the data erase function due to an increase of a magnetic flux acting on the device and an uniform application of magnetic field lines to the entire storage medium, especially because of an arrangement of a magnetic body in the magnetic field generated by the generator.

When the generator is constituted by a coil or the like, an intensity of the magnetic field is readily adjusted.

Further, when the magnetic body is constituted by a lid and a casing of a box shape accommodating the generator, the magnetic field lines by the magnetic field act on the entire storage medium in the device more steadily to achieve more excellent data erase performance.

### INDUSTRIAL APPLICABILITY

A recorded data eraser for a magnetic storage device of the present invention is used for erasing data recorded in a medium storing data by magnetism such as a hard disk drive, a magnetic tape, and a floppy disk.

## Claims

1. A recorded data eraser for a magnetic storage device defining in a main body thereof a cavity for insertion of the magnetic storage device in the cavity and comprising:
a generator for generating a magnetic field so as to erase recorded data in the device inserted in the insertion cavity; and
a magnetic body arranged within the magnetic field generated by the generator.

2. The recorded data eraser as defined in claim 1,
adapted to maintain a magnetic flux density in the insertion cavity within the range of 6,000 to 15,000 gauss in erasing data in the device.

3. The recorded data eraser as defined in claim 1 or 2,
wherein the generator comprises a coil arranged so as to encircle the magnetic storage device inserted in the insertion cavity and a direct-current power supply circuit for exciting the coil.

4. The recorded data eraser as defined in claim 3,
wherein the main body of the eraser comprises a casing of a box shape with its front face open and a lid for closing the opening of the casing openably and closably;
wherein the casing accommodates a hollow coil spool, with its internal space functioning as the insertion cavity and the coil wound around the outer periphery of the spool, such that an opening of the internal space faces to the opening of the casing; and
wherein the casing and the lid functions as the magnetic body.

5. The recorded data eraser as defined in claim 3 or 4,
wherein the direct-current power supply circuit comprises a direct-current converter for converting an alternating current into a direct current of a predetermined voltage, a capacitor charged by an electric power supply from the direct-current converter and connected in parallel with the coil, an reactor interposed in an input line from the direct-current converter to the capacitor, and a switching device interposed between the capacitor and the coil.
